# EUROPEAN PATENT SPECIFICATION

(11) **EP 0 466 843 B1**
(45) Date of publication and mention of the grant of the patent: **31.05.1995**
(21) Application number: 90916632.4
(22) Date of filing: 22.10.1990
(51) Int. Cl.: H04B 7/185, H04B 7/195

(54) **SATELLITE COMMUNICATIONS SYSTEM**
SATELLITENÜBERTRAGUNGSSYSTEM
SYSTEME DE COMMUNICATIONS PAR SATELLITE

(30) Priority: 06.11.1989 US 432269
(43) Date of publication of application: 22.01.1992
(73) Proprietor: MOTOROLA, INC., Schaumburg, IL 60196 (US)
(72) Inventor: SCHWENDEMAN, Robert, J., Pompano Beach, FL 33060 (US)
(74) Representative: Dunlop, Hugh Christopher
(86) International application number: US9006043
(87) International publication number: WO9107025

(56) References cited:
- US-A- 3 349 398
- US-A- 3 384 891
- US-A- 4 628 506
- US-A- 4 718 066
- ELECTRONICS AND COMMUNICATION ENGINEERING JOURNAL vol. 1, no. 6, 1 November 1989, LONDON,GB pages 245-253; J.R. NORBURY: 'Satellite Land mobile communication systems'
- * page 251, left column, line 34 - middle column, line 14; figure 6 *

## Description

This invention relates in general to a satellite communications systems and more particularly to a selective call receiver satellite communications system providing an increase probability of reception be selective call receivers.

### Background of the Invention

Known satellite communications systems provide point-to-point communication. A satellite relays information received from a transmitter on earth, possibly through one or more other satellites, by retransmitting the information to an area of earth.

However, the retransmission strength is limited due to power limitations within the satellites. Since some receivers, i.e., selective call receivers, may be located in areas such as buildings in which the retransmission may not penetrate, not all retransmissions will be received/

Thus, what is needed is a satellite communications system providing an increased probability of reception by selective call receivers.

### Summary of the Invention

In accordance with the present invention there is provided a satellite communication system for transmitting a message to a selective call receiver having a known location, the satellite communication system comprising transmitter means for transmitting information including the message, the satellite communication system being characterized by: satellite means for receiving the information and transmitting the message to the selective call receiver from a first calculated location relative to the known location of the selective call receiver, and subsequently for re-transmitting the message to the selective call receiver from a second calculated location relative to the known location of the selective call receiver.

In a further aspect of the invention there is provided a method for increasing the probability of a signal being received by a receiver having a known location from a transmitter in a satellite communication system, the method comprising the steps of: transmitting at a first time the signal from the transmitter to at least one satellite; the method characterized by the steps of: transmitting at a second time the signal from the at least one satellite in a first location relative to a known location of the receiver; determining a second location from which the second transmission will be made; and re-transmitting at a third time subsequent to the second time the signal from the second location relative to the known location of the receiver.

An exemplary embodiment of the present invention will now be described with reference to the accompanying drawings.

### Brief Description of the Drawings

FIG. 1 is an illustration of a conventional plurality of satellites orbiting earth.

FIG. 2 is a block diagram of components within a satellite.

FIG. 3 illustrates two satellites in orbit above earth receiving and retransmitting a signal in accordance with the preferred embodiment at a first point in time.

FIG. 4 illustrates two satellites in orbit above earth receiving and retransmitting the signal in accordance with the preferred embodiment at a second point in time.

FIG. 5 illustrates radio antenna lobes of two orbiting satellites in accordance with the preferred embodiment.

### Detailed Description of the Invention

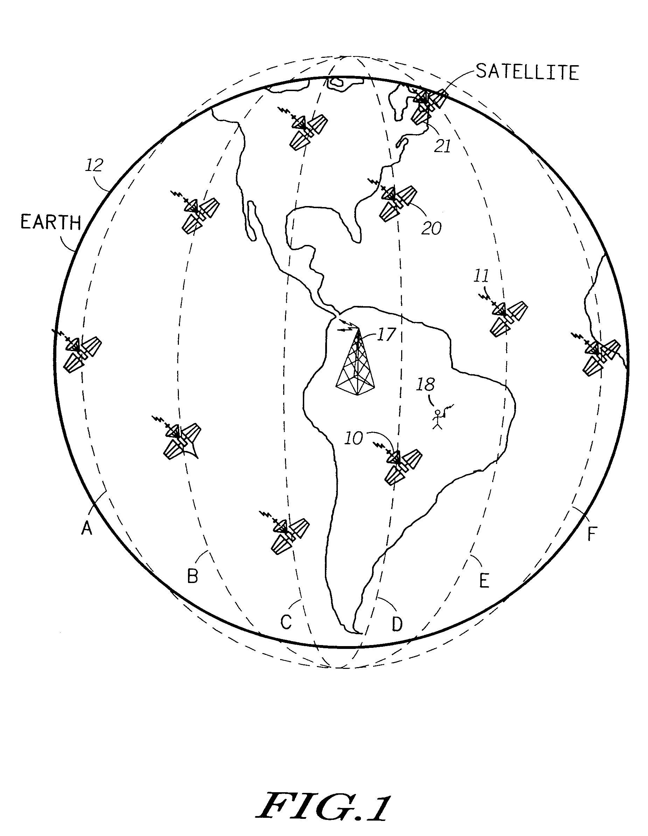

Referring to FIG. 1, a satellite configuration for a satellite communication system comprises a plurality of satellites, i.e., 10, 11, 20 and 21 in low earth orbit in one of a plurality of orbiting planes A, B, C, D, E, and F which are highly inclined in nature and provide comprehensive communication coverage for the earth 12.

In the highly inclined orbit configuration of the preferred embodiment, satisfactory earth coverage could be accomplished with forty-eight low-earth orbiting satellites. These satellites could be arranged in six highly inclined orbiting planes, eight satellites per plane. Other configurations could be used. Other lower inclined orbiting arrangements would require substantially more satellites in order to achieve the same coverage of the earth as the highly inclined configuration.

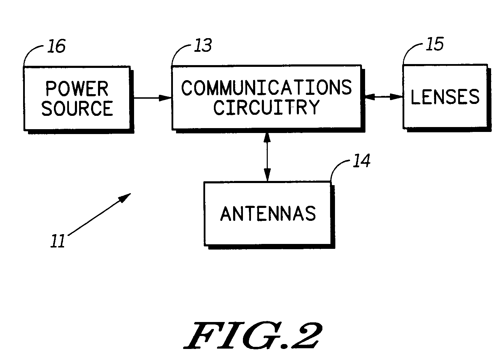

Referring to FIG. 2, each satellite 10, 11, 20 and 21 contains satellite communications circuitry 13, suitable antennas 14 and 15, i.e., helicals antennas for up/down links and lenses for cross links, respectively and an unfolding array of solar cells 16 along with storage batteries connected to the solar cells to provide power for the communications system. The solar cell array 16 is opened after being placed in orbit by a launching vehicle and the communications system thereby activated. The communications systems are then individually brought on line via standard telemetry, tracking and control channels to form a network.

The satellite communication system described herein provides spectral efficiency: the same frequency may be simultaneously used by different satellite communication systems. Each satellite 10, 11, 20 and 21 acts as a platform for relaying a transmission from a transmitter 17 to a receiver 18. The transmitters and receivers may be located on the ground, on a vehicle in the air or on the water, in different parts of the globe, etc.

In the present invention, a plurality of receivers 18, such as selective call receivers including pagers, are relatively fixed in position at any given time while the satellites 11 are in continuous movement. Although the user of a receiver 18 may "roam", this distance is relatively small compared to the traveling distance of the satellite overhead. Each satellite communications circuitry 13 comprises a microprocessor for determining how the transmission is to be relayed to the appropriate receiver 18 in a manner to be described hereinafter.

Conventional satellite systems could increase the probability of reception by increasing the transmission power of the satellite; however, this method is limited by the average power available to the satellites from the solar cells. Furthermore, once the signal is subjected to the multipath reflection environment of an urban area, the signal level at a given distance from the transmitter generally varies as a log normal distribution at a given distance from the transmitter. The variance (sigma) of this distribution is often around eight decibels (db). In order to increase the percent success from fifty percent to seventy five percent would require 0.7 sigma additional power or 5.6 db. However, one uncorrelated repeat would give the same results with an equivalent energy increase of only three db. To improve from ninety percent success to ninety nine percent success would require 1.1 sigma power or 8.8 db; however, one uncorrelated repeat would have the same effect for a savings of 5.8 db of energy.

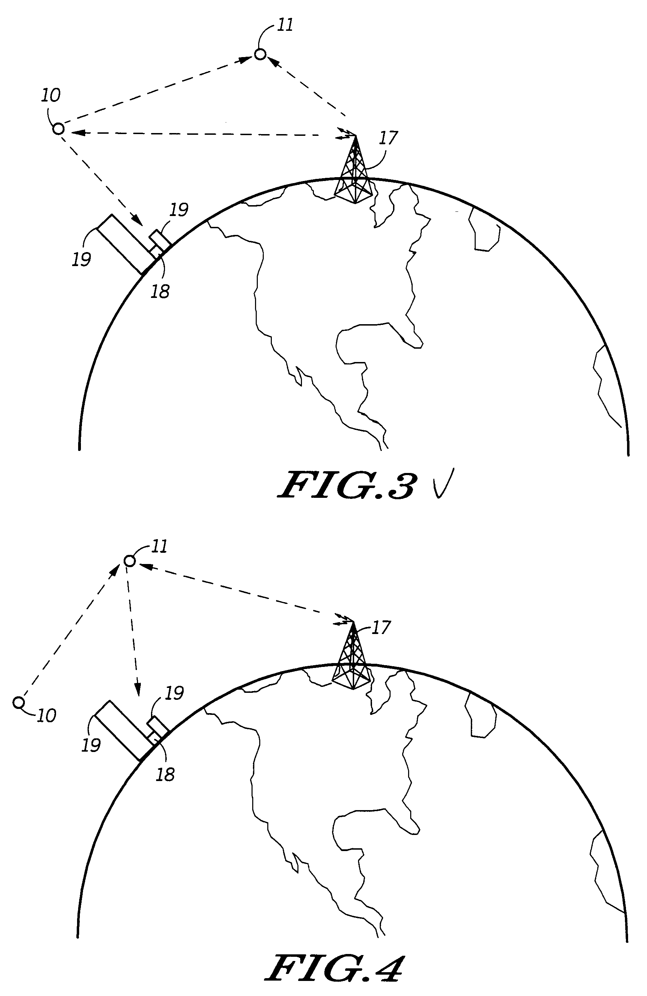

Referring to FIGs. 3 and 4 and in accordance with the present invention, the receiver may be located in an area of limited reception, such as between buildings 19. At a first point in time (FIG. 3), information is transmitted from the transmitter 17 to the satellite 10, which is then relayed (retransmitted) down to the receiver 18. Further, the information may be transmitted to the satellite 11, either from the transmitter 17 or relayed from the satellite 10. At a second point in time (FIG. 4), the satellite 11 retransmits the information to the receiver 18 from a location different than the location from which satellite 10 previously retransmitted. The information may be transmitted to the satellite 11 at the second point in time by the transmitter 17 or from satellite 10 or from another satellite. The first and second points in time may differ from a few seconds to several minutes, for example. The probability of reception of the information by the receiver 18 is increased since the receiver receives the transmissions from different angles. These different angles generally have different multipath reflections, creating different signal levels at the point of reception. The system selects which satellite (the general direction from which the signal is received) and at what time (the angle of incidence) the relay is accomplished, thereby maximizing the probability of reception. The system performs these decisions through known computer optimization techniques and is preferably located on the ground, but may alternatively reside in one or more of the satellites. Furthermore, since the receiver 18 may change its position within the transmission area between the first and second points in time, the probability of reception may be further increased.

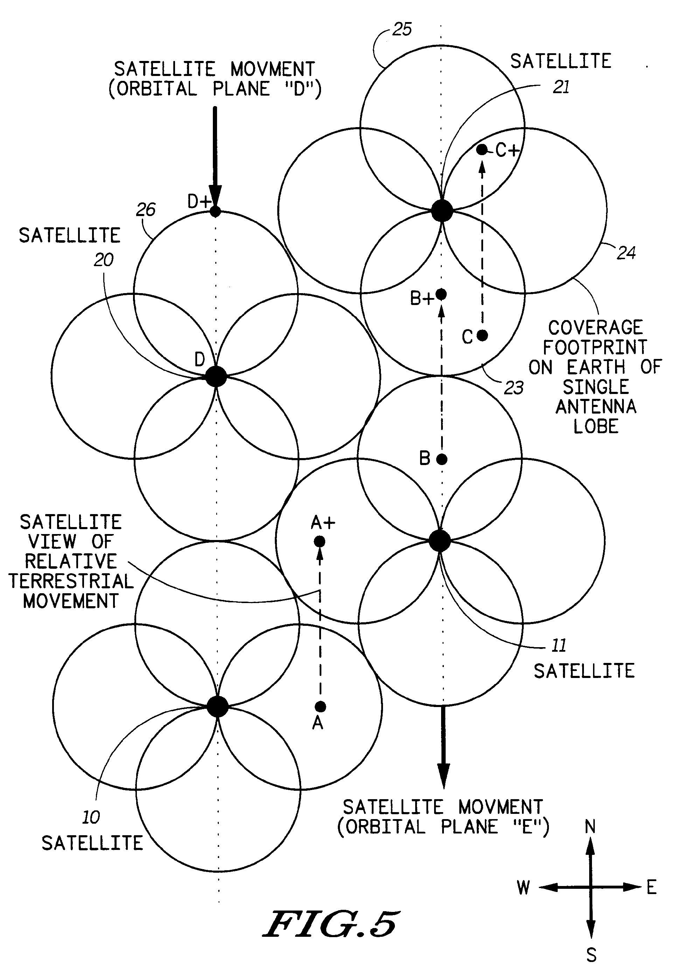

Referring to FIG. 5, each of the satellites typically may project four or more lobes (generally shown as circularly areas) onto the earth which are achieved via antennas 14 with fixed beam widths appropriate to the number of lobes. Although the lobes are illustrated as four circles, it would be understood by those skilled in the art that the lobes could comprise various shapes and numbers. The satellites 10 and 20 are in a north to south polar orbit "E" and the satellites 11 and 21 are in a north to south polar orbit "D", although other orbits including opposing orbits could be used. Four examples are illustrated for describing how the satellites 10, 11, 20 and 21 retransmit the information, wherein the letters A, B, C and D represent the receiver 18 at the first point in time and the letters A+, B+, C+ and D+ represent the receiver 18 at the second point in time. Initially, the transmitter 17 sends the information to an overhead satellite which could be any one of the satellites in the particular orbit near the transmitter 17. In the case shown in FIG. 1, the transmitter 17 may send the information to the satellite 10 for retransmission to the receiver 18 at "A". The user of the receiver 18 would have previously informed the system of the receiver's location, i.e., within a particular city. At the second point in time after the satellite 11 has moved further south, the information is retransmitted from the satellite 11 to the receiver 18 at "A+". The information may be passed through several satellites from the transmitter 17 before being transmitted to the receiver 18. In a like manner, example "B" illustrates the transmissions from two satellites 11 and 21 in the same orbit, example "C" illustrates the transmissions from two lobes 23 and either 24 or 25 from the same satellite 21, and example "D" illustrates the transmissions from the same lobe 26 from the same satellite 20. The information may be passed to the second satellite 11 during either the first or second point in time and from any one of several sources such as any satellite or the transmitter 17.

In summary, by relaying the information from two different locations (angles) at different points in time, the probability of reception by a receiver 18 is increased.

## Claims

1. A satellite communication system for transmitting a message to a selective call receiver (18) having a known location, the satellite communication system comprising transmitter means (17) for transmitting information including the message, the satellite communication system being characterized by:
satellite means (11) for receiving the information and transmitting the message to the selective call receiver (18) from a first calculated location relative to the known location of the selective call receiver (18), and subsequently for re-transmitting the message to the selective call receiver (18) from a second calculated location relative to the known location of the selective call receiver (18).

2. The satellite communication system according to claim 1, wherein the transmitter means (17) transmits data to the satellite means (11) indicating the known location of the receiver (18), and the satellite means (11) determines when the subsequent re-transmission is to be made.

3. The satellite communication system according to claim 1, wherein said satellite means (11) is responsive to the received information for calculating the first and second locations.

4. The satellite communication system according to claim 1, wherein said satellite means (11) is responsive to the received information for determining the first and second locations of each signal transmission by timing the transmission of the plurality of signals with respect to the angle of incidence to the known location of the receiver (18).

5. The satellite communication system according to claim 1, wherein said satellite means (11) is responsive to the received information for determining first and second points in time in which said satellite means (11) effects the first and second re-transmissions, respectively.

6. The satellite communication system according to any preceding claim, wherein the satellite means (11) comprises a single satellite.

7. The satellite communication system according to any one of claims 1 to 5, wherein the satellite means (11) comprises a first satellite (11) for re-transmitting the information and a second satellite for subsequently re-transmitting the information.

8. The satellite communication system according to claim 7, wherein the second satellite (10) receives the information from the first satellite.

9. A method for increasing the probability of a signal being received by a receiver (18) having a known location from a transmitter in a satellite communication system, the method comprising the steps of:
transmitting at a first time the signal from the transmitter (17) to at least one satellite;
the method characterized by the steps of:
transmitting at a second time the signal from the at least one satellite (11) in a first location relative to a known location of the receiver (18);
determining a second location from which the second transmission will be made; and
re-transmitting at a third time subsequent to the second time the signal from the second location relative to the known location of the receiver (18).

10. The method according to claim 9, further comprising the step of: transmitting data to the at least one satellite (11) indicating the first and second locations.

## Patentansprüche

1. Satelliten-Kommunikationssystem zur Übertragung einer Nachricht an einen Wahlrufempfänger (18) an einen bekannten Ort, wobei das Satelliten-Kommunikationssystem eine Sendereinrichtung (17) zum Senden von Information einschließlich der Nachricht aufweist, und das Satelliten-Kommunikationssystem gekennzeichnet ist durch:
eine Satelliten-Einrichtung (11) zum Empfang der Information und Senden der Nachricht an den Wahlrufempfänger (18) von einem ersten, berechneten Ort in bezug auf den bekannten Ort des Wahlrufempfängers (18), und nachfolgend zum Rücksenden der Nachricht an den Wahlrufempfänger (18) von einem zweiten, berechneten Ort in bezug auf den bekannten Ort des Wahlrufempfängers (18).

2. Satelliten-Kommunikationssystem nach Anspruch 1, bei welchem die Sendereinrichtung (17) Daten, welche den bekannten Ort des Empfängers (18) angeben, an die Satelliten-Einrichtung (11) überträgt, und die Satelliten-Einrichtung (11) festlegt, wann die nachfolgende Rücksendung erfolgen soll.

3. Satelliten-Kommunikationssystem nach Anspruch 1, bei welchem die Satelliten-Einrichtung (11) auf die empfangene Information reagiert, um den ersten und zweiten Ort zu berechnen.

4. Satelliten-Kommunikationssystem nach Anspruch 1, bei welchem die Satelliten-Einrichtung (11) auf die empfangene Information reagiert, um den ersten und zweiten Ort jeder Signalübertragung zu bestimmen, durch zeitliche Abstimmung der Aussendung der mehreren Signale in bezug auf den Einfallswinkel auf den bekannten Ort des Empfängers (18).

5. Satelliten-Kommunikationssystem nach Anspruch 1, bei welchem die Satelliten-Einrichtung (11) auf die empfangene Information reagiert, um einen ersten und einen zweiten Zeitpunkt festzulegen, an welchem die Satelliten-Einrichtung (11) das erste bzw. zweite Rücksenden ausführt.

6. Satelliten-Kommunikationssystem nach einem der voranstehenden Ansprüche, bei welchem die Satelliten-Einrichtung (11) einen einzigen Satelliten umfaßt.

7. Satelliten-Kommunikationssystem nach einem der Ansprüche 1 bis 5, bei welchem die Satelliten-Einrichtung (11) einen ersten Satelliten (11) aufweist, um die Information zurückzusenden, sowie einen zweiten Satelliten zum erneuten Rücksenden der Information.

8. Satelliten-Kommunikationssystem nach Anspruch 7, bei welchem der zweite Satellit (10) die Information von dem ersten Satelliten empfängt.

9. Verfahren zum Erhöhen der Wahrscheinlichkeit, daß ein Signal von einem Empfänger (18) an einem bekannten Ort empfangen wird, das von einem Sender stammt, in einem Satelliten-Kommunikationssystem, mit folgenden Schritten:
Senden des Signals von dem Sender (17) an zumindest einen Satelliten zu einem ersten Zeitpunkt;
wobei das Verfahren durch folgende Schritte gekennzeichnet ist:
Senden des Signals von dem zumindest einen Satelliten (11) an einem ersten Ort in bezug auf einen bekannten Ort des Empfängers (18) zu einem zweiten Zeitpunkt;
Bestimmung eines zweiten Ortes, von welchem das zweite Senden aus erfolgt; und
Rücksenden, zu einem dritten Zeitpunkt nach dem zweiten Zeitpunkt, des Signals von dem zweiten Ort in bezug auf den bekannten Ort des Empfängers.

10. Verfahren nach Anspruch 9, mit folgendem weiteren Schritt:
Senden von Daten an den zumindest einen Satelliten (11), welche den ersten und zweiten Ort anzeigen.

## Revendications

1. Système de communication par satellite pour la transmission d'un message vers un récepteur d'appel sélectif (18) ayant un emplacement connu, le système de communication par satellite comprenant un moyen d'émetteur (17) pour transmettre l'information, y compris le message, et le système de communication par satellite étant caractérisé par :
un moyen de satellite (11) pour recevooir l'information et transmettre le message récepteur d'appel sélectif (18) depuis un premier emplacement calculé par rapport à l'emplacement connu du récepteur d'appel sélectif (18) et ensuite pour retransmettre le message vers le récepteur d'appel sélectif (18) depuis un deuxième emplacement calculé par rapport a l'emplacement connu du récepteur d'appel sélectif (18).

2. Système de communication par satellite selon la revendication 1, dans lequel le moyen d'émetteur (17) transmet en direction du moyen de satellite (11) des données qui indiquent l'emplacement connu du récepteur (18) et dans lequel le moyen de satellite (11) détermine le moment où la retransmission ultérieure doit avoir lieu.

3. Système de communication par satellite selon la revendication 1, dans lequel ledit moyen de satellite (11) réagit à l'information reçue pour calculer les premier et deuxième emplacements.

4. Système de communication par satellite selon la revendication 1, dans lequel ledit moyen de satellite (11) réagit à l'information reçue pour déterminer les premier et deuxième emplacements de chaque transmission de signal en synchronisant la transmission de la multiplicité de signaux par rapport à l'angle d'incidence sur l'emplacement connu du récepteur (18).

5. Système de communication par satellite selon la revendication 1, dans lequel ledit moyen de satellite (11) réagit à l'information reçue pour déterminer les premier et deuxième moments dans le temps où ledit moyen de satellite (11) effectue respectivement la première et la deuxième retransmissions.

6. Système de communication par satellite selon l'une quelconque des revendications précédentes, dans lequel ledit moyen de satellite (11) comprend un satellite unique.

7. Système de communication par satellite selon l'une quelconque des revendications 1 à 5, dans lequel le moyen de satellite (11) comprend un premier satellite (11) pour retransmettre l'information et un deuxième satellite pour retransmettre ultérieurement l'information.

8. Système de communication par satellite selon la revendication 7, dans lequel le deuxième satellite (10) reçoit l'information depuis le premier satellite.

9. Prpcédé destiné a augmenter la probabilité qu'un signal soit reçu par un récepteur (18) ayant un emplacement connu depuis un émetteur dans un système de communication par satellite, le procédé comprenant les étapes suivantes :
transmission, à un premier moment dans le temps, du signal depuis l'émetteur (17) vers au mons un satellite;
méthode caractérisée par les étapes suivantes :
transmission, à un deuxième moment dans le temps, du signal depuis au moins le satellite (11) dans un premier emplacement par rapport à un emplacement connu du récepteur (18);
détermination d'un deuxième emplacement depuis lequel la deuxième transmission sera effectuée; et
retransmission, à un troisième moment dans e temps venant après le deuxième moment dans le temps, du signal depuis le deuxième emplacement par rapport à l'emplacement connu du récepteur (18).

10. Procédé selon la revendication 9, comprenant en outre l'étape suivante :
transmission, vers au moins le satellite (11), de données indiquant les premier et deuxième emplacements.
